# EUROPEAN PATENT APPLICATION

(11) **EP 3 967 731 A1**
(43) Date of publication of application: **16.03.2022**
(21) Application number: 20195384.1
(22) Date of filing: 09.09.2020
(51) Int. Cl.: C08L 89/00, C08J 3/075

(54) **PROTEIN DISPERSIONS**

(71) Applicant: Xampla Limited, Cambridge, Cambridgeshire CB4 0FW (GB)
(72) Inventor: RODRIGUEZ GARCIA, Marc, Cambridge, Cambridgeshire CB4 0FW (GB); KNOWLES, Tuomas Pertti Jonathan, Cambridge, Cambridgeshire CB4 0FW (GB); WARD TAYLOR, James, Cambridge, Cambridgeshire CB4 0FW (GB)
(74) Representative: Gurney, Steven

(57) **Abstract**

The present invention relates to a method for preparing a plant-based protein hydrogel slurry, and to a method for preparing a plant-based structured material (e.g. a film, a casting, a moulding etc.) from the plant-based protein hydrogel slurry.

## Description

### FIELD OF THE INVENTION

The present invention relates to a method for preparing a plant-based protein hydrogel slurry, and to a method for preparing a plant-based structured material (e.g. a film, a casting, a moulding etc.) from the plant-based protein hydrogel slurry. The present invention also relates to the plant-based protein hydrogel slurries and the plant-based structured materials per se, and to uses thereof.

### BACKGROUND

There is an increasingly urgent need to reduce the environmental impact of many day-to-day activities and to reduce the amounts of non-renewable resources involved in these activities. An example of this is the increasing use of biodegradable or renewable packaging to replace conventional plastics such as polyethylene and polypropylene (e.g. edible films for use in foodstuffs).

Consequentially, efforts have been focussed on the use of natural or naturally-derived materials, such as celluloses, alginates, starches, collagen and collagen-derived proteins, as film and packaging forming materials. However, many of these naturally-derived films often have issues such as limited tensile strength or susceptibility to moisture or limited barrier properties which limit the range of applications for which they are suitable. One option is to chemically modify the film-forming material, typically by using a cross-linking chemical which can cross-link long-chain polymers, but this introduces complexity and additional chemistries which may not be suitable for the end-use, e.g. in an edible film or product having high biodegradability. Similarly, a composite material that combines natural and synthetic materials so as to overcome any limitations of one material will also be more complicated to produce and may not be edible or recyclable.

Amongst the different types of biopolymers that could serve as building blocks to generate new functional materials such as films, proteins are interesting candidates given their ability to self-assemble into functional structures.

Currently, the use of these materials for commercial application is restricted to highly soluble, animal-derived proteins. Commonly used animal-based proteins in food products, such as whey protein, exhibit good biocompatibility, biodegradability, amphiphilic and functional properties such as water solubility, emulsifying and foaming capacity. However, there is an increasing demand for replacing animal-derived proteins for plant-based ones, not only due to their lower environmental impact but also due to their lower allergenicity and reduced cost.

The formation of self-assembled hydrogel materials such as films from plant-based proteins has been reported, where hydrogels can be obtained from soy and pea proteins under a range of experimental conditions. However, the mechanical properties obtained from current plant-based materials are generally lower in comparison to the ones obtained from animal-derived ones as the plant proteins are more difficult to process, at least in part due to their inherent low solubility in water.

Thus, there exists a need to develop simple routes to plant-based material products having improved physical properties so as to increase the range of applications for which plant-based materials can be used to further replace synthetic materials.

### SUMMARY OF THE INVENTION

Viewed from a first aspect, the present invention provides a method for the preparation of a plant-based protein hydrogel slurry, the method comprising:
(a) forming a solution comprising one or more plant-based protein(s) in a solvent system, wherein the solvent system comprises miscible co-solvents; wherein a first co-solvent increases solubility of the plant-based protein(s), and a second co-solvent decreases solubility of the plant-based protein(s);
(b) inducing the protein in the solution to undergo a sol-gel transition to form a plant-based protein hydrogel; and
(c) subjecting the plant-based protein hydrogel to a shear treatment to form a plant-based protein hydrogel slurry.

Viewed from a further aspect, the present invention provides a plant-based protein hydrogel slurry prepared according to a method as hereinbefore described.

Viewed from a further aspect, the present invention provides a method for the preparation of a plant-based structured material, the method comprising:
(a) preparing a plant-based protein hydrogel slurry according to a method as hereinbefore described; and
(b) subjecting the plant-based protein hydrogel slurry to one or more solvent level reduction step(s) to reduce the level of said first co-solvent and/or said second co-solvent to give said plant-based structured material.

Viewed from a further aspect, the present invention provides a plant-based structured material prepared according to a method as hereinbefore described.

Viewed from a further aspect, the present invention provides the use of a plant-based protein hydrogel slurry as hereinbefore described to produce a plant-based structured material.

### DEFINITIONS

As used herein, the term "low shear step" may refer to a process step in which low levels of mechanical energy are applied to a material, preferably by a cutting action, to cause it to break or fragment primarily into large discrete fragments. "Low-shear" does not typically include any milling step that shatters or fragments a material by high-speed impact, for example impacts at a differential velocity of greater than 2 ms⁻¹. Nor does it typically include milling processes based on cavitation. In a particular embodiment, during the low shear step, a hydrogel is fragmented to give fragments such that at least 80% by weight of the hydrogel fragments have a maximum size as determined by sieving, of between 1 mm and 50 mm. Sieving of the hydrogel slurry can be performed according to the method described herein.

As used herein, the term "high shear step" may refer to a process step which applies energy to reduce the hydrogel to small fragments, such as to form e.g. a colloidal dispersion. In a particular embodiment, during the high shear step, a hydrogel is fragmented to give fragments having a d₅₀ particle size as determined by Dynamic Light Scattering (DLS) of less than 500nm. DLS can be performed according to the methods defined herein.

### DETAILED DESCRIPTION

The present application describes a process for making pourable and pumpable hydrogel slurries, which can be dried to form robust films, coatings, mouldings and other structured objects. Thus, the present invention provides a method for the preparation of a plant-based protein hydrogel slurry, the method comprising:
(a) forming a solution comprising one or more plant-based protein(s) in a solvent system, wherein the solvent system comprises miscible co-solvents; wherein a first co-solvent increases solubility of the plant-based protein(s), and a second co-solvent decreases solubility of the plant-based protein(s);
(b) inducing the protein in the solution to undergo a sol-gel transition to form a plant-based protein hydrogel; and
(c) subjecting the plant-based protein hydrogel to a shear treatment to form a plant-based protein hydrogel slurry.

In embodiments, prior to step (b), it may be preferred to remove solvent(s) from the protein solution so as to form a more concentrated protein solution prior to step (b). This can be done by the application of heat and/or vacuum amongst other techniques. This initial solvent reduction may offer advantages such as simplifying subsequent drying. Suitable equipment could include scraped-wall evaporators or twin-screw extruders with applied vacuum.

Any suitable plant-based proteins may be used in the present invention. In preferred methods of the present invention, the plant-based protein(s) is selected from soybean protein, pea protein, rice protein, potato protein, wheat protein, corn zein protein or sorghum protein. Preferably, the plant protein(s) is selected from soy protein, pea protein, potato protein, and/or rice protein. More preferably, the plant-based protein(s) is selected from soy protein and/or pea protein.

Suitable plant-based proteins further include:
- Brassicas: including Brassica balearica: Mallorca cabbage, Brassica carinata: Abyssinian mustard or Abyssinian cabbage, Brassica elongata: elongated mustard, Brassica fruticulosa: Mediterranean cabbage, Brassica hilarionis: St Hilarion cabbage, Brassica juncea: Indian mustard, brown and leaf mustards, Sarepta mustard, Brassica napus: rapeseed, canola, rutabaga, Brassica narinosa: broadbeaked mustard, Brassica nigra: black mustard, Brassica oleracea: kale, cabbage, collard greens, broccoli, cauliflower, kai-lan, Brussels sprouts, kohlrabi, Brassica perviridis: tender green, mustard spinach, Brassica rapa (syn. B. campestris): Chinese cabbage, turnip, rapini, komatsuna, Brassica rupestris: brown mustard, Brassica tournefortii: Asian mustard
- Solanaceae: including tomatoes, potatoes, eggplant, bell and chili peppers;
- cereals: including maize, rice, wheat, barley, sorghum, millet, oats, rye, triticale, fonio
- pseudocereals: including amaranth (love-lies-bleeding, red amaranth, prince-of-Wales-feather), breadnut, buckwheat, chia, cockscomb (also called quail grass or soko), pitseed Goosefoot, qañiwa, quinoa and, wattleseed (also called acacia seed);
- Legume: including Acacia alata (Winged Wattle), Acacia decipiens, Acacia saligna (commonly known by various names including coojong, golden wreath wattle, orange wattle, blue-leafed wattle), Arachis hypogaea (peanut), Astragalus galegiformis, Cytisus laburnum (the common laburnum, golden chain or golden rain), Cytisus supinus, Dolichios lablab (common names include hyacinth bean, lablab-bean bonavist bean/pea, dolichos bean, seim bean, lablab bean, Egyptian kidney bean, Indian bean, bataw and Australian pea.), Ervum lens (Lentil), Genista tinctorial (common names include dyer's whin, waxen woad and waxen wood), Glycine max (Soybean), Lathyrus clymenum (peavines or vetchlings), Lathyrus odoratus (peavines or vetchlings), Lathyrus staivus (peavines or vetchlings), Lathyrus Silvetris (peavines or vetchlings), Lotus tetragonolobus (asparagus-pea or winged pea), Lupinus albus (Lupin), Lupinus angustifolius (lupin), Lupinus luteus (Lupin), Lupinus polyphyllus (Lupin), Medicago sativa (Alfalfa), Phaseolus aureus (Mung bean), Phaseolus coccineus (Runner bean), Phaseolus nanus (Green bean / French bean), Phaseolus vulgaris (Green bean / French bean), Pisum sativum (pea), Trifolium hybridum (Clover), Trifolium pretense (Red clover), Vicia faba (Broad bean), Vicia sativa (Vetch), Vigna unguiculate (cowpea)
- Non-Legumes: including: Acanshosicyos horrida (Acanshosicyos horrida), Aesculus hyppocastanum (Conker tree / Horsechestnut), Anacardium occidentale (Cashew tree), Balanites aegyptica, Bertholletia excels (Brazil nut), Beta vulgaris (Sugar beet), Brassica napus (Rapeseed), Brassica juncea (Brown mustard), Brassica nigra (Black mustard), Brassica hirta (Eurasian mustard), Cannabis sativa (marijuana), Citrullus vulgaris (Sort of watermelon), Citrus aurantiaca (Citrus), Cucurbita maxima (squash), Fagopyrum esculentum (knotweed), Gossypium barbadense (Extra long staple cotton), Heianthus annuus (sunflower), Nicotiana sp. (Tobacco plant), Prunus avium (cherry), Prunus cerasus (Sour cherry), Prunus domestica (plum), Prunus amygdalus (almond), Rricinus communis (Caster bean/ caster oil plant), Sasamum indicum (Sesame), Sinapis alba (White mustard), Terlfalrea pedata (Oyster nut).

For the avoidance of doubt, the plant-based hydrogels and structured materials according to the present invention do not encompass plants in their natural state, e.g. naturally formed plant cells, organelles or vesicles are not plant-based hydrogels or structured materials of the present invention.

In methods according to the present invention, the plant-based protein hydrogel is formed by adding the plant-based protein into a solvent system, wherein the solvent system comprises two or more miscible co-solvents as defined herein. By selecting a solvent system that comprises miscible co-solvents, wherein a first co-solvent increases solubility of the plant-based protein(s), and a second co-solvent decreases solubility of the plant-based protein(s), it is possible to control the properties of the hydrogel and related sol-gel conditions.

The first co-solvent increases solubility of the plant-based protein(s). The first co-solvent may be considered a solubilising co-solvent. There may be one or more solubilising co-solvent(s) and the solubilising co-solvent(s) may fully or partially solubilise the plant-based protein(s).

Examples of solubilising co-solvents are organic acids. An organic acid is an organic compound with acidic properties. Suitable organic acids include acetic acid, formic acid, propionic acid or an α-hydroxy acid. Suitable α-hydroxy acids include glycolic acid, lactic acid, malic acid, citric acid and tartaric acid. Preferred organic acids are acetic acid and lactic acid. Using an organic acid enables solubilisation of the plant protein and also allows for mild hydrolysis of the protein. For example, without wishing to be bound by theory, the solubility of plant-based proteins in organic acid is possible due to: i) the protonation of proteins and ii) the presence of an anion solvation layer which contributes to a reduction of hydrophobic interactions.

In preferred methods of the present invention, the first co-solvent is an organic acid.

In preferred methods of the present invention, the first co-solvent has a boiling point of less than 130°C, more preferably less than 120 °C.

The second co-solvent has decreased solubility of the plant-based protein(s), as compared to the first co-solvent. The second co-solvent may be considered a de-solubilising co-solvent. There may be one or more de-solubilising co-solvent(s).

Examples of de-solubilising second co-solvent(s) are an aqueous buffer solution. Preferably, the second co-solvent may be water, ethanol, methanol, acetone, acetonitrile, dimethylsulfoxide, dimethylformamide, formamide, 2-propanol, 1-butanol, 1-propanol, hexanol, t-butanol, ethyl acetate or hexafluoroisopropanol. Particularly preferably, the second co-solvent is water and/or ethanol. Most preferably, the second co-solvent is water.

In preferred methods of the present invention, the second co-solvent has a boiling point of less than 130 °C, more preferably less than 120 °C.

In preferred methods of the present invention, the concentration of plant-based protein(s) in the solvent system is 50-250mg/ml, preferably 50-150mg/ml. The ratio of the solubilising co-solvent (typically an organic acid) may be varied depending on protein concentration, e.g. using a higher organic acid ratio with increasing protein concentration.

In preferred methods of the present invention, the solvent system has a co-solvent ratio of first co-solvent to second co-solvent from about 20-80% v/v, about 20-60% v/v, about 25-55% v/v, about 30-50% v/v, about 20%, about 30%, about 40% about 50% or about 60% v/v, most preferably about 30-50% v/v. Such ratios lead to functionally useful materials.

In preferred methods of the present invention, the protein solution is heated to a first temperature above the sol-gel temperature of the one or more plant-based protein(s) solution, then reduced to a second temperature below the sol-gel temperature of the one or more plant-based protein(s) solution so as to form a hydrogel.

In preferred methods of the present invention, the degree of protein hydrolysis is controlled to modify the properties of the resultant hydrogel. For example, increasing the organic acid concentration present during formation will increase the degree of protein hydrolysis. A higher degree of protein hydrolysis leads to the formation of less rigid hydrogels.

In order to form the solution comprising one or more plant-based protein(s), it may be necessary to apply physical stimulus to the protein / solvent system mixture to enable dissolution of the protein. Suitable physical stimuli include heating, ultrasonication, agitation, high-shear mixing or other physical techniques. A preferred technique is heating, optionally with simultaneous or subsequent ultrasonication.

Preferably, the protein / solvent system mixture is subjected to a physical stimulus which is heating, wherein the solution is heated to about or above 70°C. More preferably, the protein / solvent system mixture is heated to about or above 75°C, about or above 80°C, about or above 85°C or about 90°C. Even more preferably, the protein / solvent system mixture is heated to 85°C.

Preferably, the protein / solvent system mixture is subjected to a physical stimulus which comprises heating for a period of about 5 minutes, 10 minutes, 15 minutes, 20 minutes, 25 minutes, 30 minutes, or greater than 30 minutes. A preferred heating time period is about 30 minutes. The heated protein / solvent system mixture is optionally subjected to simultaneous or subsequent ultrasonication.

The resulting protein solution is heated such that the protein solution is then held above the sol-gel transition for the protein solution. By modifying the solvent system (for example through selection of the choice of organic acid, the ratio of organic acid to further solvent or through further means) it is possible to modify the sol-gel transition temperature for the protein(s). Through appropriate selection of conditions, it is possible to carefully control the sol-gel transition of the protein thereby controlling the formation of the hydrogel.

Preferably, the protein solution is heated to about or above 70°C. More preferably, the protein solution is heated to about or above 75°C, about or above 80°C, about or above 85°C or about 90°C. Even more preferably, the protein solution is heated to about 85°C.

The protein solution may be held at elevated temperature for a time period of about 5 minutes, 10 minutes, 15 minutes, 20 minutes, 25 minutes, 30 minutes, 45 minutes or 1 hour. A preferred time period is at least 30 minutes to enable the proteins to fully solubilise. It is possible to hold the protein solution at an elevated temperature for a longer period of time. This may be useful for a commercial batch process or for use in a fluidic processing step where it is necessary to retain the protein solution in liquid form for higher periods of time.

Having heated the protein solution to above the sol-gel transition temperature, the temperature of the protein solution can be reduced to a second temperature below the sol-gel transition temperature to facilitate formation of the hydrogel. The second temperature may be room temperature. The protein solution may be held at the reduced temperature for a time period of about 5 minutes, 10 minutes, 15 minutes, 20 minutes, 25 minutes or about 30 minutes. A particular reduced time period is about 5 minutes. However, the method of the present invention allows the protein to remain in solution for long periods of time. As such, depending on need, the protein solution can be kept above the sol-gel transition temperature for as long as required to retain the protein in liquid form. This could be hours, days or more. Also, since the reaction is reversible, a solution could, for example be kept at a lower temperature (for example room temperature) where a hydrogel will form but thereafter heated to above the sol-gel transition temperature to return the solution to a liquid state for further processing. Protein hydrogels in this way could be stored for hours, days, weeks, months or years as the hydrogel remains stable for a long time.

The particular temperatures will depend on the properties of the protein source, the solvent conditions used and therefore the sol-gel transition temperature. Alternatively, the elevated and reduced temperatures may be relatively fixed (for example about 85°C then about room temperature) and the co-solvent mixture conditions are adjusted to ensure a suitable sol-gel transition temperature for the selected plant-based protein.

Thus, a preferred method of the present invention comprises:
(ai) forming a protein solution comprising one or more plant-based protein(s) and a solvent system, wherein the solvent system comprises miscible co-solvents; wherein a first co-solvent increases solubility of the plant-based protein(s), and a second co-solvent decreases solubility of the plant-based protein(s);
(aii) subjecting the protein solution to a physical stimulus for a period of time, for example heating and/or ultrasonication;
(bi) elevating the temperature of the protein solution to a first elevated temperature above the sol-gel transition temperature for a period of time;
(bii) reducing the temperature of the protein solution to below the sol-gel transition temperature such that the plant-based proteins self-aggregate into a plant-based protein hydrogel; and
(c) subjecting the plant-based protein hydrogel to a shear treatment to form a plant-based protein hydrogel slurry.

The protein solution may be held at an elevated temperature in step (bi) while it is shaped in a suitable mould where after the temperature is reduced in step (bii) allowing the proteins to form into a hydrogel.

Without wishing to be bound by theory, it is believed that when the plant protein is added to the solvent system and subjected to a physical stimulus such as heating and/or sonication, the plant proteins partially unfold, resulting in the exposure of hydrophobic amino acids initially buried within the protein native structure. Once partially unfolded, the co-solvents are able to interact with the unfolded protein molecules. For example, an organic acid has greater access to protonate amino acid residues, as well as enabling the formation of anion salt bridges that stabilise hydrophobic interactions. Also, upon heating at elevated temperatures, protein-protein non-covalent intermolecular contacts are disrupted.

Further, it is believed that upon cooling the protein solution to below the sol-gel temperature, protein-protein non-covalent intermolecular contacts are enabled, thus promoting the self-assembly of plant protein molecules into a hydrogel of inter-connected protein aggregates.

Further, it is believed that the application of mechanical agitation, for example ultrasonication, disrupts large colloidal protein aggregates into smaller ones, as well as disrupting protein intermolecular interactions. Using this approach, the size of the protein aggregates can be significantly reduced to particle sizes below 100nm.

Preferably, the method of the present invention produces a plant-based protein hydrogel slurry comprising protein aggregates with an average size less than 200nm, preferably less than 150nm, less than 125nm, less than 100nm, less than 90nm, less than 80nm, less than 70nm, less than 60nm, less than 50nm, less than 40nm, or less than 30nm.

It is believed that the method of the present invention allows the plant proteins to aggregate into supramolecular structures held by intermolecular hydrogen bonding interactions, and in particular between the β-strands. The method of the present invention enables materials to be formed in which there are high levels of β-sheet intermolecular interactions.

A feature of the method of the present invention is that it is not necessary to use cross-linking agents as the plant-based proteins will self-form hydrogels. Thus, in preferred methods of the present invention, the plant-based protein hydrogel does not contain or does not substantially contain a cross-linking agent.

However, in alternative preferred methods of the present invention, the plant-based protein hydrogel may comprise a cross-linking agent. Suitable cross-linking agents include microbial transglutaminase, glutaraldehyde, formaldehyde, glyoxal, phenolic compounds, epoxy compounds, genipin or dialdehyde starch.

In the methods of the present invention, the plant-based protein hydrogel is subjected to a shear treatment to form a plant-based protein hydrogel slurry. Without wishing to be bound by theory, it is thought that the shear treatment modifies the composition of the hydrogel such that the resultant slurry is comprised of small fragments. This means the plant-based protein hydrogel slurries can be poured and pumped. Additionally, the small fragments are then able to bond together well during subsequent processing, e.g. to form a film. The inventors of the present invention have surprisingly found that the smaller the fragments of the hydrogel slurry, the better the tensile strength and optical properties of the resulting film.

The inventors have also found that the rheological properties of the hydrogel ideally need to be controlled with certain limits to aid processing of the hydrogel and the properties of the final film.

In preferred methods of the present invention, said shear treatment comprises a high-shear step. Preferably, said high-shear step involves fragmenting the plant-based protein hydrogel into fragments.

In preferred methods of the present invention, said fragments produced in said high-shear step have a d₅₀ as determined by Dynamic Light Scattering (DLS) of less than 500 nm, preferably less than 300 nm, more preferably less than 200 nm, even more preferably less than 50 nm.

In preferred methods of the present invention, said high-shear step involves ultrasonication, high-shear mechanical stirring (e.g. using equipment such as a Silverson high-shear mixer), or cavitation.

In preferred methods of the present invention, the high-shear step is conducted at a temperature that is below the sol-gel temperature of the plant-based protein solution. In preferred methods of the present invention, said high-shear step is conducted for a duration of at least 5 minutes, more preferably at least 1 minute.

In preferred methods of the present invention, said shear treatment comprises two steps. Preferably, said shear treatment comprises a low-shear step followed by a high-shear step.

In preferred methods of the present invention, said low-shear step involves fragmenting the plant-based protein hydrogel into fragments. Preferably, at least 80 wt% of said fragments produced in said low-shear step have a particle size in the range 1 mm to 50 mm, preferably 5 mm to 30 mm, more preferably 10 mm to 30 mm. This can be measured by collecting the fragments on a series of sieves of decreasing mesh size and weighing the amounts on the different meshes. The low-shear step is conducted at a temperature that is below the sol-gel temperature of the plant-based protein solution.

In preferred methods of the present invention, said low-shear step involves mechanical cutting. By mechanical cutting, we mean cutting using a knife edge (e.g. a knife, an extruder blade etc.) In preferred methods of the present invention, said high-shear step involves further fragmenting the plant-based protein hydrogel. Preferably, said fragments produced in said high-shear step have a d₅₀ as determined by Dynamic Light Scattering of less than 500 nm, preferably less than 300 nm, more preferably less than 200 nm, even more preferably less than 50 nm.

In preferred methods of the present invention, said high-shear step is conducted at a temperature that is below the sol-gel temperature of the plant-based protein solution.

In preferred methods of the present invention, said high-shear step is conducted at a temperature that is below the protein denaturation temperature of the plant-based protein solution.

Said high-shear step is conducted for a duration of at least 5 minutes, more preferably at least 1 minute.

In preferred methods of the present invention, said high-shear step involves ultrasonication, high-shear mechanical stirring (e.g. using equipment such as a Silverson high-shear mixer), or cavitation.

In preferred methods of the present invention, step (c) further comprises subjecting the plant-based protein hydrogel slurry to a solvent reduction step, most preferably a solubilising solvent reduction step, between said low-shear step and said high-shear step.

By solubilising solvent, we mean a solvent or mixture of solvents in which the plant-based protein hydrogel slurry dissolves. Examples include organic acids: such as acetic acid, formic acid, propionic acid and/or an α-hydroxy acid; wherein the α-hydroxy acid may preferably be selected from glycolic acid, lactic acid, malic acid, citric acid and/or tartaric acid.

In preferred methods of the present invention, wherein said solvent reduction step comprises the steps of:
(i) contacting the fragments of the plant-based hydrogel slurry with a non-solubilising solvent;
(ii) separating the fragments of the plant-based hydrogel slurry from the non-solubilising solvent to give a washed plant-based protein hydrogel; and
(iii) optionally repeating steps (i) and (ii).

Step (i) involves contacting the fragments of the plant-based protein hydrogel slurry with a non-solubilising solvent. By non-solubilising solvent, we mean a solvent or mixture of solvents in which the plant-based protein hydrogel slurry does not dissolve. Examples include water or a mixture of water and ethanol.

In preferred methods of the present invention, step (ii) involves mesh filtration. More preferably, the mesh filtration involves using multiple meshes of decreasing size.

Without wishing to be bound by theory, it is thought that due to the porous nature of the hydrogel, the solvent reduction step can remove some or all of the solvent (e.g. organic acid) from the hydrogel via a solvent exchange.

It is important for the hydrogel fragments to be weak and deformable enough, and small enough, to combine together well to form the final film or other structured material during subsequent processing. If the hydrogel fragments are not deformable enough, the strength and integrity of any film or structured material will be reduced. In addition, strong hydrogels are harder to disperse to form a slurry.

It is also important for the hydrogel fragments not to be too soft and deformable. Being too soft can make any intermediate processing steps (e.g. washing and solvent exchange) difficult. Excessively soft hydrogel fragments typically arise from insufficient levels of pre-formed macro-structures in the hydrogel, which will typically result in weaker films or structured materials.

The strength of a protein hydrogel can be altered by varying the concentration of protein and organic acid, amongst other variables.

It is therefore important for the strength of the hydrogel used to form the hydrogel slurries to be within certain limits. This can be measured by oscillatory rheometry. A suitable measure of hydrogel strength is the storage modulus, G', of the hydrogel. Suitable test conditions are 1% strain at an oscillatory frequency of 1 Hz at 20 °C. Suitable equipment is an Anton Paar MCR 92 Rheometer with a 50mm diameter, 1 degree angle cone and plate measurement geometry.

Thus, in preferred methods of the present invention, prior to washing said plant-based protein hydrogel has a storage modulus (G') at 10 rad/s of greater than 1000Pa, preferably greater than 2000Pa, more preferably greater than 5000Pa, even more preferably greater than 6000Pa, most preferably greater than 8000Pa.

In preferred methods of the present invention, prior to washing said plant-based protein hydrogel has a storage modulus (G') at 10 rad/s of less than 20,000Pa, preferably less than 15,000Pa, more preferably less than 10,000Pa.

Further, in preferred methods of the present invention, the washed plant-based protein hydrogel has a storage modulus (G') at 10 rad/s of greater than 500Pa, preferably greater than 1000Pa, more preferably greater than 2500Pa, even more preferably greater than 3000Pa, most preferably greater than 4000Pa.

In preferred methods of the present invention, the washed plant-based protein hydrogel has a storage modulus (G') at 10 rad/s of less than 20,000Pa, preferably less than 15,000Pa, more preferably less than 10,000Pa.

Preferred methods of the present invention, further comprise the step of:
(d) altering the pH of the plant-based protein hydrogel slurry.

In preferred methods of the present invention, step (d) is carried out after step (c). In alternative preferred methods of the present invention, step (d) is carried out sequentially with step (c).

During adjustment of the pH of the plant-based protein hydrogel slurry, it is possible for the slurry to pass through the isoelectric point of the protein. Due to the lack of charge repulsion at the isoelectric point, the dispersed protein fragments in the plant-based protein hydrogel slurry can quickly coagulate. To avoid this, pH modification materials can be used to rapidly change the pH and therefore minimise the time that the slurry is at the isoelectric point.

Thus, in preferred methods of the present invention, step (d) involves adding a pH-modification material to the plant-based protein hydrogel slurry. Preferably, said pH-modification material is an aqueous solution comprising monovalent metal ions, divalent metal ions such as calcium, or ammonium ions, preferably an alkaline aqueous solution comprising monovalent metal ions, divalent metal ions, or ammonium ions. More preferably, said pH-modification material is an aqueous hydroxide solution, such as sodium hydroxide, potassium hydroxide, or ammonium hydroxide.

In preferred methods of the present invention, the pH of the plant-based protein hydrogel slurry after step (d) is below the isoelectric point of the plant-based protein by at least 1 pH unit.

In preferred methods of the present invention, the pH of the plant-based protein hydrogel slurry after step (d) is above the isoelectric point of the plant-based protein by at least 1 pH unit. Preferred methods of the present invention further comprise adding an additional ingredient(s) to the plant-based protein hydrogel slurry. Preferably, said additional ingredient(s) is selected from plasticisers, opacifiers, preservatives, pigments and other inorganic nanoparticles (such as clays), or mixtures thereof.

Particularly preferably, said additional ingredient(s) is a plasticiser. In preferred methods of the present invention, said plasticiser is selected from ethylene glycol, diethylene glycol, triethylene glycol, tetraethylene glycol, polyethylene glycol, propylene glycol, sorbitol, mannitol, xylitol, lactic acid, glycolic acid, triethyl citrate, fatty acids, glucose, mannose, fructose, sucrose, ethanolamine, urea, triethanolamine, vegetable oils, lecithin, waxes and amino acids.

The amount of plasticizer to be incorporated will depend on the use of the final material, for example a film. Preferably, the plant-based protein hydrogel slurry may comprise about 1% plasticiser, about 2%, about 5%, about 10%, about 20%, about 30%, about 40%, about 50%, about 60% or more. More preferably, the plant-based protein hydrogel slurry may comprise between about 5-50% plasticiser, about 10-50%, about 20-40% about 15-35% or about 20% plasticizer.

Adding a plasticizer can influence the mechanical properties of the material. Typically, adding a plasticiser will increase the elasticity of the material but this typically conversely reduces the strength, for example the tensile strength, of the resultant material.

Composite films having improved physical and/or barrier particles can be formed by the addition of inorganic particles such as clay platelets to the protein hydrogel slurry.

In preferred methods of the present invention, the plant-based protein hydrogel slurry has a viscosity in the range of 10 to 10000 cps at 50 s⁻¹, preferably in the range 15 to 5000 cps, preferably 20 to 2000 cps as measured by an Anton Paar MCR 92 Rheometer using a plate and cone measurement geometry with a 50mm plate and 1 °angle at 50 s⁻¹.

In preferred methods of the present invention, the plant-based protein hydrogel slurry has a protein solids content in the range 5 wt% to 25 wt% based upon the total weight of the plant-based protein hydrogel slurry. The protein level affects the rheology of the hydrogel.

The plant-based hydrogel slurries described herein allow for the formation of a range of useful plant-based biomaterials. Using plant-based materials has a number of advantages over previously used animal or petrochemical sources. Firstly, plant sources are renewable and can be efficiently obtained in an environmentally efficient manner. Secondly, plant sources are biodegradable and are therefore an environmentally sound alternative to other plastics. Thirdly, in contrast to animal derived proteins, plant-based proteins have the significant advantage that they do not introduce animal derived proteins into a human. This has positive impacts both from a pharmacological and pharmaceutical perspective where animal sourced material must undergo stringent checks and processes to ensure no adverse elements are present (for example removing prions and the like); but also because the products are suitable for vegetarian/vegans.

Since plant-based proteins are naturally present in a human (or other animal)'s diet, biomaterials made according to the present invention exhibit a higher degree of digestibility compared to other biopolymers such as polysaccharides (for example, alginates or chitosan). This makes them particularly suitable for pharmaceutical, food and/or cosmetic use.

Preferably, the plant-based hydrogel slurries of the present invention can be used to form films, for example thin films. Plant protein derived films have many applications including forming biodegradable flexible films for food packaging applications.

An advantage of the plant-based materials of the present invention over animal-based materials (or starch-based/cellulose materials), is their inherent insolubility in water. Most biopolymer films would readily dissolve in water, thus making them unusable for food packaging applications on their own, necessitating an extra coating layer with a synthetic polymer. These issues can be overcome with the present invention. Films of the present invention may also be soluble in alkaline conditions.

The present invention also provides a plant-based protein hydrogel slurry prepared according to the method hereinbefore described.

The present invention also provides a method for the preparation of a plant-based structured material, the method comprising:
(a) preparing a plant-based protein hydrogel slurry according to the method hereinbefore described; and
(b) subjecting the plant-based protein hydrogel slurry to one or more solvent level reduction step(s) to reduce the level of said first co-solvent and/or said second co-solvent to give said plant-based structured material.

In preferred methods of the present invention, the one or more solvent level reduction step(s) reduces the level of the first co-solvent (e.g. an organic acid).

In preferred methods of the present invention, the one or more solvent level reduction step(s) reduces the level of the second co-solvent (e.g. an alcohol such as ethanol).

In preferred methods of the present invention, step (b) involves placing the plant-based protein hydrogel slurry on a surface before performing the one or more solvent level reduction step(s).

In preferred methods of the present invention, said solvent level reduction step involves heating. Preferably, said solvent level reduction step involves heating at a temperature in the range 50 to 100 °C, more preferably at a temperature in the range 55 to 95 °C . In such a solvent level reduction step, the solvent is therefore removed via evaporation.

In preferred methods of the present invention, said solvent level reduction step involves forced convection of dry air.

In preferred methods of the present invention, the plant-based structured material is a film.

In alternative preferred methods of the present invention, the plant-based structured material is a casting (i.e. a plant-based structured material formed by moulding, preferably injection moulding).

In alternative preferred methods of the present invention, the plant-based structured material is a coating.

In preferred methods of the present invention, the plant-based structured material comprises a plant-based protein(s) having secondary structure with at least 40% intermolecular β-sheet, at least 50% intermolecular β-sheet, at least 60% intermolecular β-sheet, at least 70% intermolecular β-sheet, at least 80% intermolecular β-sheet, or at least 90% intermolecular β-sheet.

In preferred methods of the present invention, the plant-based structured material has a Young's modulus over 20MPa; preferably over 50MPa, over 80MPa, over 100MPa, over 200MPa, over 300MPa, over 400MPa, over 500MPa, or over 600MPa. The Youngs Modulus is a measure of the strength of the structured article.

In preferred methods of the present invention, the plant-based structured material is a film.

Preferably, the films have a thickness in the range 1 to 1000 µm, preferably 10 to 150 µm, more preferably 20 to 100 µm, even more preferably 30 to 70 µm, most preferably 35 to 60 µm. This can be measured with a micrometer.

Preferably, the films have an elongation break percentage of above 10%, above 20%, above 30%, above 40%, above 50%, above 60%, above 70%, above 80%, above 90%, above 100% or more.

Films produced according to the method of the present invention can be micropatterned with features ranging from 100nm to 1000µm, enabling novel functional properties such as: super-hydrophobicity (lotus-leaf effect) or structural colour (attributed to Mie scattering).

Functional composite films can be produced by embedding inorganic nanoparticles, such as gold nanoparticles or silver nanoparticles, into the protein matrix. Applications could include materials suitable for flexible electronics or films with antibacterial properties. Composite films having improved physical and/or barrier particles can be formed by embedding particles such as clay platelets in the protein matrix.

The present invention also provides a plant-based structured material prepared according to the method hereinbefore described.

A preferred plant-based structured material according to the present invention is a film, a casting, or a coating. Preferred properties of the plant-based structured materials of the present invention are described above. The plant-based structured materials of the present invention are useful in a variety of applications, including food, beverages, cosmetics, formulations (e.g. paints), and packaging. The transparency and high strength of the films of the present invention make them particularly well suited to packaging applications.

The present invention is also directed to the use of a plant-based protein hydrogel slurry as hereinbefore defined to produce a plant-based structured material. Preferably, said plant-based structured material is a film, a casting, moulding or a coating.

### BRIEF DESCRIPTION OF THE FIGURES

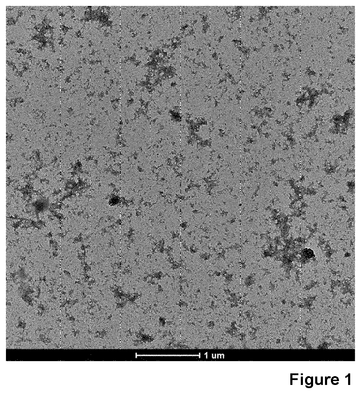

Figure 1 shows a transmission electron microscopy (TEM) image of the diluted pea protein-based slurry prepared in Example 1.

### EXAMPLES

### Materials

Pea Protein Isolate (PPI) (80% protein) purchased from Cambridge Commodities Ltd).

Lactic acid (food-grade, ≥80%) was purchased from Cambridge Commodities Ltd.

### Measurement methods

Viscosity measurements were made using an Anton Paar MCR 92 Rheometer using a plate and cone measurement geometry with a 50mm plate and 1 degree angle and a constant shear of 50 s⁻¹ at 20 °C.

Storage Modulus (G') can be measured using an Anton Paar MCR 92 Rheometer using a plate and cone measurement geometry with a 50mm plate and 1 degree angle with 1% strain at an oscillatory frequency of 1 Hz.

Dynamic Light Scattering (DLS) measurements were taken using a Zeta Sizer Nano S from Malvern Panalytical and operated according to the manufacturer's instructions. The hydrogel slurries was diluted by a factor of 100 with deionised water and the pH adjusted to 3 prior to measurement. It is important that the pH of a sample is away from the isoelectric point of that sample so as to avoid misleading coagulation during testing. The isoelectric point of the protein material tested here was 4.5. It is also important that the slurry is sufficiently diluted so as to avoid misleading results due to particles coagulating. Typically, several dilutions should and/or buffer solutions should be tested to ensure proper dispersion. A 200 µL of the diluted slurry was placed in a cuvette and positioned in the equipment. Testing was then carried out according to the standard equipment procedures. The d₅₀ measured is for the wt/volume distribution.

Other equipment, such as the NANO-flex II^{®} system from Colloid Metrix, can be used.

The particle sizes of the fragments of hydrogel from the low-shear step can be determined by sieving. A suitable technique is to take 200g of the hydrogel mixture from the low-shear step and to rapidly disperse it in 1000 mL of DI water. The dispersed mixture is then quickly poured through a series of stacked sieves of decreasing mesh size between 50mm and 1 mm. Sieves from Endecotts are suitable. The % of the slurry within a specific size rage can be calculated by combining the weights of the fragments on the different meshes and calculating this as a % of the total amount of slurry. Errors caused by any additional solvent exchange are minimal due to the short test period etc.

Transmission Electron Microscopy (TEM) measurements were taken using a FEI Talos F200X G2 TEM from Thermo Scientific. A suitable technique is to prepare a test sample by diluting the fine plant-based hydrogel slurry to a 1:100 dilution with a 3% acetic acid solution and deposit the sample on a TEM grid (C400Cu, EM resolutions), followed by staining with uranyl acetate. The maximum fragment size is then determined by optical examination of at least 30 fragments chosen at random from within the field of view of a test sample. The maximum length is the maximum length of a line drawn between any two opposing boundaries of a fragment that does not cross any external boundaries.

The Youngs Modulus and Tensile Strength of structured objects such as films can be measured using a 5ST electromechanical Universal tester from Tinius Olsen. A 10cm by 1cm strip is placed between grips and extended at 12.5mm/min and the forces and extension recorded. The thickness of the film prior to testing can be measured by a micrometer.

### Example 1: Preparation of a pea protein gel structured object

### (a) Protein hydrogel formation

500 ml of a mixture was prepared consisting of 12.5 % (w/v) Pea Protein Isolate in 40% (v/v) lactic acid solution.

The mixture was then heated in a water bath at 80°C for 30 minutes, followed by a short sonication step to disrupt large colloidal aggregates (Hielscher UIP1000hdT (1000W, 20kHz)), after which a transparent solution was obtained. The energy applied was 16 kWh over 7 minutes.

The solution was then poured into a 220mm petri dish and left to cool down at 10°C for 72h to obtain a self-standing protein hydrogel.

### (b) Application of shear to protein hydrogel

Shear was then applied to the hydrogel as follows. The protein hydrogel was cut into ∼1cm cubes via a low-shear cutting step. The cubes were placed inside a 75µm filter bag, which was then submerged inside a bucket containing 5L of deionised water. This formed a coarse protein hydrogel slurry within the filter bag. The hydrogel cubes were left to soak for 1 h, with occasional gentle agitation. This step was performed to reduce to concentration of lactic acid in the hydrogel by diffusion to the continuous aqueous phase and was repeated 5 more times until the final pH of the aqueous solution was 3.28.

The strained gel cubes were transferred into a 500 ml bottle and were exposed to probe sonication in a high shear step for 10 minutes (-0.2 kJ/ml) so as to form a homogeneous low-viscosity protein dispersion. The viscosity of the slurry was 12cps. The d₅₀ size of the fine slurry fragments was 90.

The fine hydrogel slurry was adjusted to pH 2.6 by adding a small amount of lactic acid, and was then poured onto a heated surface (which was held at 80 °C) and dried for 1 hour to form a structured object which was a film, with an average thickness of 18.1 µm. The resultant film was transparent and had a Youngs Modulus of 361 MPa and a tensile strength of 14 MPa.

### CLAUSES:

1. A method for the preparation of a plant-based protein hydrogel slurry, the method comprising:
   (a) forming a solution comprising one or more plant-based protein(s) in a solvent system, wherein the solvent system comprises miscible co-solvents; wherein a first co-solvent increases solubility of the plant-based protein(s), and a second co-solvent decreases solubility of the plant-based protein(s);
   (b) inducing the protein in the solution to undergo a sol-gel transition to form a plant-based protein hydrogel; and
   (c) subjecting the plant-based protein hydrogel to a shear treatment to form a plant-based protein hydrogel slurry.
2. The method according to clause 1, wherein the plant protein(s) is selected from soybean protein, pea protein, rice protein, potato protein, wheat protein, corn zein protein or sorghum protein.
3. The method according to clause 1 or clause 2, wherein the first co-solvent is an organic acid; preferably acetic acid, formic acid, propionic acid and/or an α-hydroxy acid; wherein the α-hydroxy acid may preferably be selected from glycolic acid, lactic acid, malic acid, citric acid and/or tartaric acid; with particularly preferred organic acids being acetic acid and/or lactic acid.
4. The method according to any one of clauses 1 to 3, wherein a second or further co-solvent(s) is an aqueous buffer solutuion; preferably selected from water, ethanol, methanol, acetone, acetonitrile, dimethylsulfoxide, dimethylformamide, formamide, 2-propanol, 1-butanol, 1-propanol, hexanol, t-butanol, ethyl acetate or hexafluoroisopropanol; particularly preferably water and/or ethanol; further particularly preferably water.
5. The method according to any one of clauses 1 to 4, wherein the solvent system has a co-solvent ratio of first co-solvent to second co-solvent of about 20-80% v/v, preferably about 20-60% v/v, about 25-55% v/v, about 30-50% v/v, about 20%, about 30%, about 40% about 50% or about 60% v/v, most preferably about 30-50% v/v.
6. The method according to any one of clauses 1 to 5, wherein the protein solution is heated to a first temperature above the sol-gel temperature of the one or more plant-based protein(s) solution, then reduced to a second temperature below the sol-gel temperature of the one or more plant-based protein(s) solution to form a hydrogel.
7. A method according to any one of clauses 1 to 6, wherein said shear treatment comprises a high-shear step.
8. A method according to clause 7, wherein said high-shear step involves fragmenting the plant-based protein hydrogel into fragments.
9. A method according to clause 8, wherein said fragments produced in said high-shear step have a d₅₀ as determined by DLS of less than 500 nm, preferably less than 300 nm, more preferably less than 200 nm, even more preferably less than 50 nm.
10. A method according to any one of clauses 7 to 9, wherein said high-shear step involves ultrasonication, high-shear mechanical stirring, or cavitation.
11. A method according to any one of clauses 1 to 6, wherein said shear treatment comprises two steps.
12. A method according to clause 11, wherein said shear treatment comprises a low-shear step followed by a high-shear step.
13. A method according to clause 12, wherein said low-shear step involves fragmenting the plant-based protein hydrogel into fragments.
14. A method according to clause 13, wherein at least 80% of said fragments produced in said low-shear step have a particle size in the range 1 mm to 50 mm, preferably 1 mm to 30 mm, more preferably 10 mm to 30 mm, more preferably 15 mm to 30 mm, even more preferably 20 mm to 30 mm, as determined by sieving.
15. A method according to any one of clauses 12 to 14, wherein said low-shear step involves mechanical cutting.
16. A method according to any one of clauses 13 to 15, wherein said high-shear step involves further fragmenting the plant-based protein hydrogel.
17. A method according to clause 16, wherein said fragments produced in said high shear-step have a D50 as determined by DLS of less than 500 nm, preferably less than 300 nm, more preferably less than 200 nm, even more preferably less than 50 nm.
18. A method according to any one of clauses 12 to 17, wherein said high-shear step involves ultrasonication, high-shear mechanical stirring, or cavitation.
19. A method according to any one of clauses 12 to 18, wherein step (c) further comprises subjecting the plant-based protein hydrogel slurry to a solvent reduction step, preferably an organic solvent reduction step, between said low-shear step and said high-shear step.
20. A method according to clause 19, wherein said solvent reduction step comprises the steps of:
   (i) contacting the fragments of the plant-based hydrogel slurry with a non-solubilising solvent;
   (ii) separating the fragments of the plant-based hydrogel slurry from the non-solubilising solvent to give a washed plant-based protein hydrogel; and
   (iii) optionally repeating steps (i) and (ii).
21. A method according to clause 20, wherein step (ii) involves mesh filtration.
22. A method according to clause 20 or 21, wherein prior to washing said plant-based protein hydrogel has a storage modulus (G') at 10 rad/s of greater than 1000Pa, preferably greater than 2000Pa, more preferably greater than 5000Pa, even more preferably greater than 6000Pa, most preferably greater than 8000Pa.
23. A method according to any one of clauses 20 or 22, wherein prior to washing said plant-based protein hydrogel has a storage modulus (G') at 10 rad/s of less than 20,000Pa, preferably less than 15,000Pa, more preferably less than 10,000Pa.;
   optionally wherein prior to washing said plant-based protein hydrogel has a storage modulus (G') at 10 rad/s of between about 1000 to 20,000Pa, preferably between about 2000 to 15,000Pa, more preferably between about 2000 to 10,000Pa.
24. A method according to any one of clauses 20 to 23, wherein said washed plant-based protein hydrogel has a storage modulus (G') at 10 rad/s of greater than 500Pa, preferably greater than 1000Pa, more preferably greater than 2500Pa, even more preferably greater than 3000Pa, most preferably greater than 4000Pa.
25. A method according to any one of clauses 20 to 24, wherein said washed plant-based protein hydrogel has a storage modulus (G') at 10 rad/s of less than 20,000Pa, preferably less than 15,000Pa, more preferably less than 10,000Pa;
   optionally wherein said washed plant-based protein hydrogel has a storage modulus (G') at 10 rad/s of between about 500 to 20,000Pa, between about 500 to 15,000Pa, between about 500 to 10,000Pa, between about 1000 to 20,000Pa, between about 1000 to 15,000Pa, or between about 1000 to 10,000Pa.
26. A method according to any one of clauses 1 to 25, further comprising the step of:
   (d) altering the pH of the plant-based protein hydrogel slurry such that it is different to the isoelectric point of the protein hydrogel by more than 1 pH unit.
27. A method according to clause 26, wherein step (d) is carried out after step (c).
28. A method according to clause 26, wherein step (d) is carried out sequentially with step (c).
29. A method according to any one of clauses 26 to 28, wherein step (d) involves adding a pH-modification material to the plant-based protein hydrogel slurry.
30. A method according to clause 29, wherein said pH-modification material is a solution comprising monovalent metal ions, divalent metal ions or ammonium ions, preferably an aqueous alkaline solution comprising monovalent metal ions, divalent metal ions or ammonium ions.
31. A method according to clause 30, wherein said pH-modification material is an aqueous hydroxide solution, , preferably sodium hydroxide, potassium hydroxide, or ammonium hydroxide.
32. A method according to any one of clauses 26 to 31, wherein the pH of the plant-based protein hydrogel slurry after step (d) is below the isoelectric point of the plant-based protein by at least 1 pH unit.
33. A method according to any one of clauses 26 to 31, wherein the pH of the plant-based protein hydrogel slurry after step (d) is above the isoelectric point of the plant-based protein by at least 1 pH unit.
34. A method according to any one of clauses 1 to 33, further comprising adding an additional ingredient to the plant-based protein hydrogel slurry.
35. A method according to clause 34, wherein said additional ingredient is selected from plasticisers, opacifiers, preservatives, pigments and nanoparticles, or mixtures thereof.
36. A method according to clause 35, wherein said additional ingredient is a plasticiser.
37. A method according to clause 36, wherein said plasticiser is selected from ethylene glycol, diethylene glycol, triethylene glycol, tetraethylene glycol, polyethylene glycol, propylene glycol, sorbitol, mannitol, xylitol, fatty acids, glucose, mannose, fructose, sucrose, ethanolamine, urea, triethanolamine,; vegetable oils, lecithin, waxes and amino acids.
38. A method according to any one of clauses 1 to 37, wherein the plant-based protein hydrogel slurry has a viscosity in the range 10 to 10000 cps at 50 s⁻¹, preferably in the range 15 to 5000 cps at 50 s⁻¹.
39. A method according to any one of clauses 1 to 38, wherein the plant-based protein hydrogel slurry comprises protein aggregates with an average size of less than 200nm, preferably less than 150nm, less than 125nm, less than 100nm, less than 90nm, less than 80nm, less than 70nm, less than 60nm, less than 50nm, less than 40nm , or less than 30nm.
40. A method according to any one of clauses 1 to 39, wherein the plant-based protein hydrogel slurry has a protein solids content in the range 5 wt% to 25 wt% based upon the total weight of the plant-based protein hydrogel slurry.
41. A plant-based protein hydrogel slurry prepared according to the method of any one of clauses 1 to 40.
42. A method for the preparation of a plant-based structured material, the method comprising:
   (a) preparing a plant-based protein hydrogel slurry according to the method of any one of clauses 1 to 40; and
   (b) subjecting the plant-based protein hydrogel slurry to one or more solvent level reduction step(s) to reduce the level of said first co-solvent and/or said second co-solvent to give said plant-based structured material.
43. A method according to clause 42, wherein step (b) involves placing the plant-based protein hydrogel slurry on a surface before forming the one or more solvent level reduction step(s).
44. A method according to clause 42 or clause 43, wherein said solvent level reduction step involves heating.
45. A method according to clause 44, wherein said solvent level reduction step involves heating at a temperature in the range 50 to 100°C.
46. A method according to clause 42 or clause 43, wherein said solvent level reduction step involves forced convection of dry air.
47. A method according to any one of clauses 42 to 46, wherein the plant-based structured material is a film.
48. A method according to any one of clauses 42 to 46, wherein the plant-based structured material is a casting.
49. A method according to any one of clauses 42 to 46, wherein the plant-based structured material is a coating.
50. A method according to any one of clauses 42 to 49, wherein the plant-based structured material comprises a plant-based protein(s) having secondary structure with at least 40% intermolecular β-sheet, at least 50% intermolecular β-sheet, at least 60% intermolecular β-sheet, at least 70% intermolecular β-sheet, at least 80% intermolecular β-sheet, or at least 90% intermolecular β-sheet.
51. A method according to any one of clauses 42 to 50, wherein the plant-based structured material has a Young's modulus over 20MPa; preferably over 50MPa, over 80MPa, over 100MPa, over 200MPa, over 300MPa, over 400MPa, over 500MPa, or over 600MPa.
52. A method according to any one of clauses 42 to 51, wherein the plant-based structured material is a film having a thickness in the range 1 to 1000 µm, preferably 1 to 100 µm, more preferably 10 to 100 µm, even more preferably 20 to 60 µm, most preferably 30 to 50 µm.
53. A method according to any one of clauses 42 to 52, wherein the plant-based structured material is a film having a Tensile Strength greater than 1 MPa, preferably greater than 5 MPa, preferably greater than 10 MPa and most preferably greater than 25 MPa.
54. A method according to any one of clauses 42 to 53, wherein the plant-based structured material is a film having an elongation break percentage of above 10%, above 20%, above 30%, above 40%, above 50%, above 60%, above 70%, above 80%, above 90%, above 100% or more.
55. A plant-based structured material prepared according to the method of any one of clauses 42 to 54.
56. Use of a plant-based protein hydrogel slurry according to any one of clauses 1 to 40 to produce a plant-based structured material.
57. Use according to clause 56, wherein said plant-based structured material is a film, a casting, or a coating.

## Claims

1. A method for the preparation of a plant-based protein hydrogel slurry, the method comprising:
(a) forming a solution comprising one or more plant-based protein(s) in a solvent system, wherein the solvent system comprises miscible co-solvents; wherein a first co-solvent increases solubility of the plant-based protein(s), and a second co-solvent decreases solubility of the plant-based protein(s);
(b) inducing the protein in the solution to undergo a sol-gel transition to form a plant-based protein hydrogel; and
(c) subjecting the plant-based protein hydrogel to a shear treatment to form a plant-based protein hydrogel slurry.

2. The method according to claim 1, wherein the plant protein(s) is selected from soybean protein, pea protein, rice protein, potato protein, wheat protein, corn zein protein or sorghum protein.

3. The method according to any preceding claim, wherein the protein solution is heated to a first temperature above the sol-gel temperature of the one or more plant-based protein(s) solution, then reduced to a second temperature below the sol-gel temperature of the one or more plant-based protein(s) solution to form a hydrogel.

4. A method according to any preceding claim, wherein said shear treatment comprises a high-shear step; wherein said high-shear step involves fragmenting the plant-based protein hydrogel into fragments; wherein said fragments produced in said high-shear step have a d₅₀ as determined by DLS of less than 500 nm, preferably less than 300 nm, more preferably less than 200 nm, even more preferably less than 50 nm.

5. A method according to any preceding claim, wherein said shear treatment comprises a low-shear step followed by a high-shear step.

6. A method according to claim 5, wherein at least 80% of said fragments produced in said low-shear step have a particle size in the range 1 mm to 50 mm, preferably 1 mm to 30 mm, more preferably 10 mm to 30 mm, more preferably 15 mm to 30 mm, even more preferably 20 mm to 30 mm, as determined by sieving.

7. A method according to claim 5 or claim 6, wherein step (c) further comprises subjecting the plant-based protein hydrogel slurry to a solvent reduction step, preferably a solubilising solvent reduction step, between said low-shear step and said high-shear step; wherein said solvent reduction step comprises the steps of:
(i) contacting the fragments of the plant-based hydrogel slurry with a non-solubilising solvent;
(ii) separating the fragments of the plant-based hydrogel slurry from the non-solubilising solvent to give a washed plant-based protein hydrogel; and
(iii) optionally repeating steps (i) and (ii).

8. A method according to claim 7, wherein prior to washing said plant-based protein hydrogel has a storage modulus (G') at 10 rad/s of between about 1000 to 20,000Pa, between about 1000 to 15,000Pa, between about 1000 to 10,000Pa, between about 2000 to 20,000Pa, between about 2000 to 15,000Pa, between about 2000 to 10,000Pa.

9. A method according to claim 7 or claim 8, wherein said washed plant-based protein hydrogel has a storage modulus (G') at 10 rad/s of between about 500 to 20,000Pa, between about 500 to 15,000Pa, between about 500 to 10,000Pa, between about 1000 to 20,000Pa, between about 1000 to 15,000Pa, or between about 1000 to 10,000Pa.

10. A method according to any preceding claim, further comprising the step of:
(d) altering the pH of the plant-based protein hydrogel slurry such that it is different to the isoelectric point of the protein hydrogel by more than 1 pH unit.

11. A method according to any preceding claim, further comprising adding an additional ingredient to the plant-based protein hydrogel slurry; wherein said additional ingredient is selected from plasticisers, opacifiers, preservatives, pigments and nanoparticles, or mixtures thereof.

12. A method according to any preceding claim, wherein the plant-based protein hydrogel slurry has a viscosity in the range 10 to 10000 cps at 50 s⁻¹, preferably in the range 15 to 5000 cps at 50 s⁻¹.

13. A method for the preparation of a plant-based structured material, the method comprising:
(a) preparing a plant-based protein hydrogel slurry according to the method of any preceding claim; and
(b) subjecting the plant-based protein hydrogel slurry to one or more solvent level reduction step(s) to reduce the level of said first co-solvent and/or said second co-solvent to give said plant-based structured material.

14. Use of a plant-based protein hydrogel slurry according to any preceding claim to produce a plant-based structured material.

15. Use according to claim 14, wherein said plant-based structured material is a film, a casting, a moulding, or a coating.
